# EUROPEAN PATENT APPLICATION

(11) **EP 1 798 935 A1**
(43) Date of publication of application: **20.06.2007**
(21) Application number: 06124931.4
(22) Date of filing: 28.11.2006
(51) Int. Cl.: H04L 29/08, H04L 12/58, G08B 25/10

(54) **Alarm and messaging communications system having wireless network gateway**

(30) Priority: 15.12.2005 US 300335
(71) Applicant: Ascom (Sweden) AB, 402 76 Göteborg (SE)
(72) Inventor: Sjöstedt, Martin, 414 58 Göteborg (SE)
(74) Representative: Vernout, Robert

(57) **Abstract**

A wireless network gateway (2) in an alarm system is disclosed. The alarm system includes a wireless network providing wireless communication for a plurality of wireless communications devices (3) and includes a system server (1) providing Web, alarm and messaging services. A wireless network gateway of the invention may include a translation module that can translate messages from UDP format to TCP format, or from TCP format to UDP format. A proxy module of the wireless network gateway can maintain registration information for the wireless communications devices and maintain an availability status of each registered wireless communications device. The proxy module can check the availability status of wireless communication devices when the system server initiates communication such that, if it is determined that the status of the wireless communications device is unavailable, the proxy module responds using UDP/IP with a message informing the system server that the wireless communications device is unavailable.

## Description

The present invention relates to a wireless gateway for an alarm and messaging system. The wireless gateway provides services connecting wireless communications devices to the alarm and messaging system that accommodates for wireless communications devices that are not permanently accessible.

In conventional, radio based alarm/messaging systems, the message protocol severely restricts the devices reachable by the system. Conventional radio based alarm/messaging systems that use the digital enhanced cordless telecommunications (DECT) protocol, for example, are limited to using cordless telephones. Also, conventional systems require a telephone switch (PBX).

A wireless local area network (LAN) offers the capability of extending radio based alarm/messaging systems to include a wider variety of wireless devices that can communicate over the Internet. In addition, with the advent of Internet based telephony, such as Voice Over IP (VOIP), the need for telephone switching can be eliminated.

However, the Internet was not originally designed for wireless communications devices. In particular, wireless communications devices are not permanently accessible, and can experience communications difficulty, such as signal shadow, local disturbances, or can simply be switched off. In addition, the Internet transport protocol designed for a fixed network suffers from inefficient communication in a wireless LAN. The Internet transport protocol has a relatively short time-out period. Because the wireless LAN is slower than the fixed network, such short time-outs can result in extraneous message passing in attempting to complete communication. In addition, the wireless LAN will continue to attempt access to a wireless communications device even though the device may have been turned off and is inaccessible. Such problems are acceptable for most wireless communication needs. However, in the case of an alarm/messaging system, problems such as that wireless communications devices are not permanently accessible and that the transport protocol is drastically inefficient can render use of wireless communications devices in an alarm/messaging system unsuitable.

An approach to accommodating for the problem of non-permanently accessible wireless communications devices has been for wireless network services to periodically attempt to connect to previously inaccessible communications devices.

The invention aims at solving the above problems and/or other problems that will be appreciated by the man skilled in the art.

This goal is achieved by a wireless network gateway in accordance with claim 1. The invention further relates to a method for sending messages to wireless devices in accordance with claim 5. The invention also relates to a communications system in accordance with claim 11.

Embodiments of the present invention will be described with reference to the drawings, wherein:
Figure 1 shows a schematic view of an alarm and messaging system of an embodiment of the present invention;
Figure 2 is an exemplary schematic view of the wireless network gateway and associated alarm/messaging system server of the present invention;
Figure 3 is an exemplary table of registered devices maintained in the proxy module of the wireless network gateway;
Figure 4 is an exemplary schematic view of a second embodiment of the wireless network gateway and associated alarm/messaging system server of the present invention;
Figure 5 is an exemplary schematic view of the communication path between a wireless device and the alarm module of the alarm/messaging system server;
Figure 6 is an exemplary flow diagram showing a possible flow of messages in the alarm and messaging system in the case of an alarm; and
Figure 7 is an exemplary flow diagram showing a general method of communication in the alarm and messaging system in the case of sending a message using the Internet.

The present invention relates to a wireless network gateway in an alarm and messaging system. The wireless network gateway provides services that enable translation between transmission protocols, such as between the transmission control protocol/Internet protocol (TCP/IP) of a wireless network and the user datagram protocol/Internet protocol (UDP/IP) utilized in communications involving the wireless network gateway and an alarm and messaging system server. The wireless network gateway serves to perform transition between the transmission protocol of the fixed network at the system server side of the gateway and the slower protocol required for wireless communication at the wireless network side of the gateway. The wireless network gateway can serve to emulate the operation status of portable wireless devices that receive messages from the alarm and messaging system.

For purposes of the present invention, a wireless network can include a wireless local area network (WLAN), or the like. Wireless communications devices can include wireless telephones, personal digital assistants (PDA), bluetooth capable devices, or the like. Voice communication over a wireless network can be accommodated by VOIP, or the like. Furthermore, an alarm of the present invention can include a signal to activate an indicator, such as a visual indicator, audio indicator, or the like, or can include a voice or textual alarm message indicating an alarm status. A message in the present invention can include any text, graphic, or voice message created by an originator.

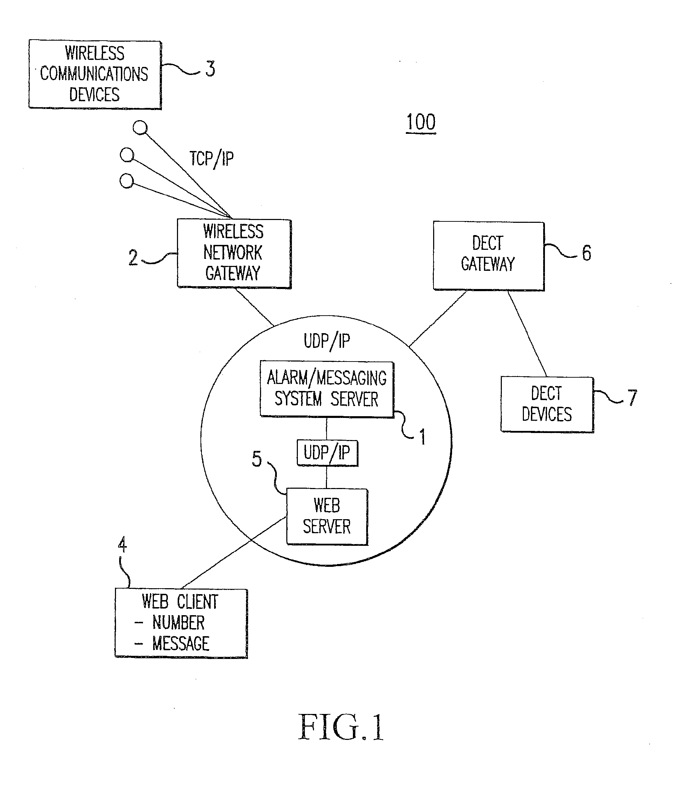

Figure 1 shows one embodiment of an alarm and messaging system 100 of the present invention. The alarm and messaging system 100 includes an alarm/messaging system server 1, wireless network gateway 2, wireless network having wireless communications devices 3, one or more Web clients 4, a Web server 5, a digital enhanced cordless telephone (DECT) gateway 6, and DECT devices 7. The wireless network gateway 2 is in communication with the wireless network of wireless communications devices 3, and is in communication with a fixed network having the alarm/messaging system server 1. The alarm and messaging system 100 can include DECT devices 7 such as cordless telephone devices communicating through the DECT gateway 6. The alarm and messaging system 100 can include a Web server 5 connected to the Internet and one or more Web clients 4, as well as any communications device that is capable of communicating over the Internet.

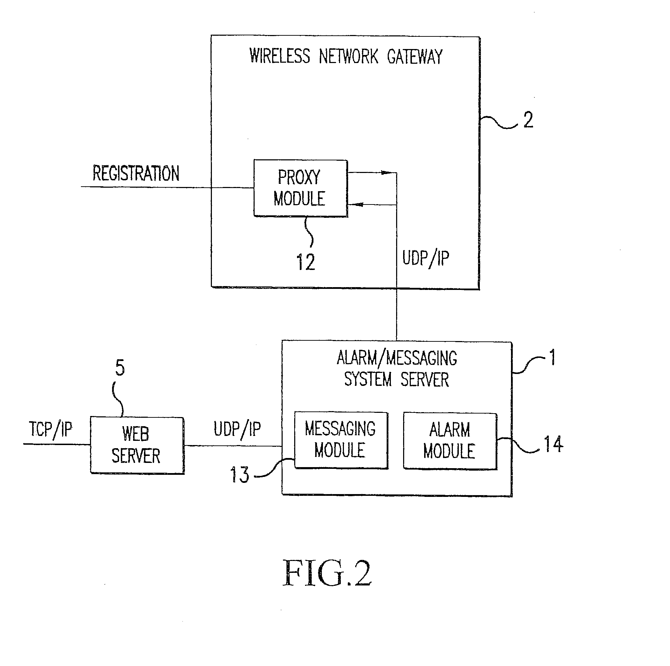

Referring to Fig. 2, an exemplary wireless network gateway 2 of the present invention can include a proxy module 12. The wireless network gateway 2 is in communication with the system server 1 of the alarm and messaging system. The system server 1 provides services for handling alarms and services for handling messages. Once a request for processing an alarm or message has been received by the system server 1, the system server 1 controls transmission of the alarm or message throughout the alarm and messaging system.

The system server 1 can include a messaging module 13 and an alarm module 14, which provide services for handling messages and services for handling alarms, respectively. A wireless communications device can send an alarm message to the system server 1 via the wireless network gateway 2 in order for the system server 1 to transmit an alarm message to other wireless communications devices 3 in the system 100. An alarm can be produced by pressing a designated key on the wireless communications device. The signal obtained by pressing the designated key causes generation of an alarm message and transmission of the alarm message to the system server 1.

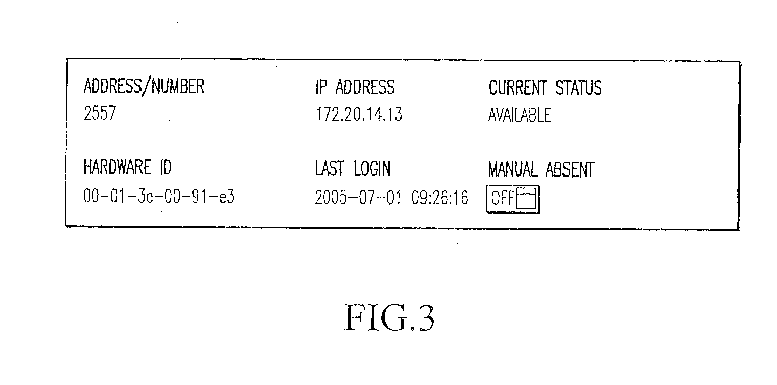

The proxy module 12 maintains registration status information of wireless communications devices 3 in the alarm and messaging system 100. Fig. 3 shows an example of registration status information maintained in the proxy module 12. When a wireless communications device is first activated, the wireless communications device registers its status as available for receiving messages, or optionally as unavailable for receiving messages. The registration status indicating either available or unavailable is maintained by the proxy module 12 for each registered wireless communications device. The wireless communications device is subsequently periodically sent a message requesting registration at a predetermined time period set by the proxy module 12.

When the system server 1 initiates a communication with a wireless communications device, it connects to the proxy module 12 and checks whether the wireless communications device is available for communication. If it is determined that the wireless communications device is registered as being available, the system server 1 establishes a communication connection with the wireless communications device. If it is determined that the wireless communications device is indicated as being unavailable, the proxy module 12 responds with a message informing the system server 1 that the wireless communications device is unavailable for communication. In addition, if a wireless communications device is registered as being available but a communication connection cannot be established due to local disturbances, etc., the proxy module 12 responds with the message informing the system server 1 that the wireless communications device is unavailable for communication.

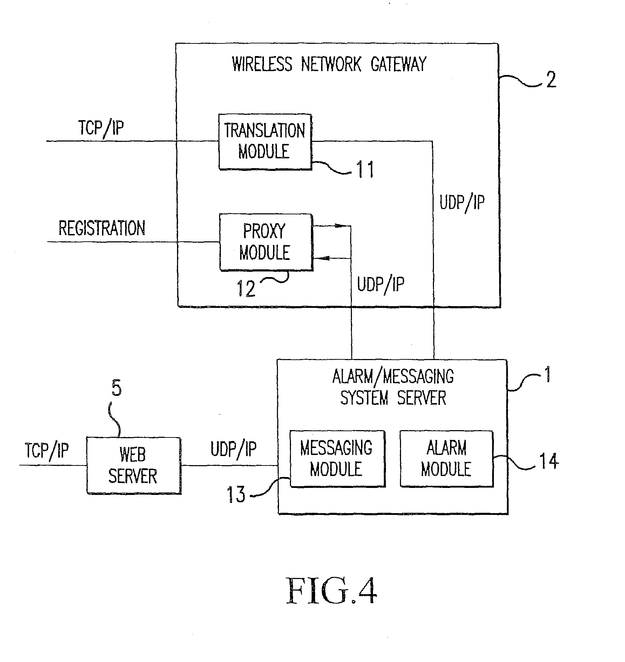

Referring to Fig. 4, an exemplary wireless network gateway 2 of a second preferred embodiment of the present invention. In the second preferred embodiment, the wireless network gateway 2 can further include a protocol translation module 11. Other components are numbered the same as in the first embodiment.

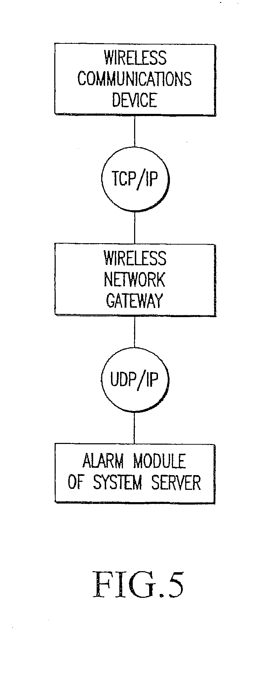

The translation module 11 of the wireless network gateway 2 receives messages from wireless communications devices 3 by way of the wireless network and translates messages directed to the messaging and alarm system formatted for TCP into messages formatted for UDP. Messages are submitted to the system server 1 using UDP. Protocols responsible for transmission between a wireless communications device and the alarm module 14 of the system server 1 are shown in Fig. 5. Other communications with the system server 1, such as VoIP are conducted using UDP. Messages relating to the messaging and alarm system to be transmitted over the wireless network to wireless communications devices are converted from UDP format to TCP format by the translation module 11.

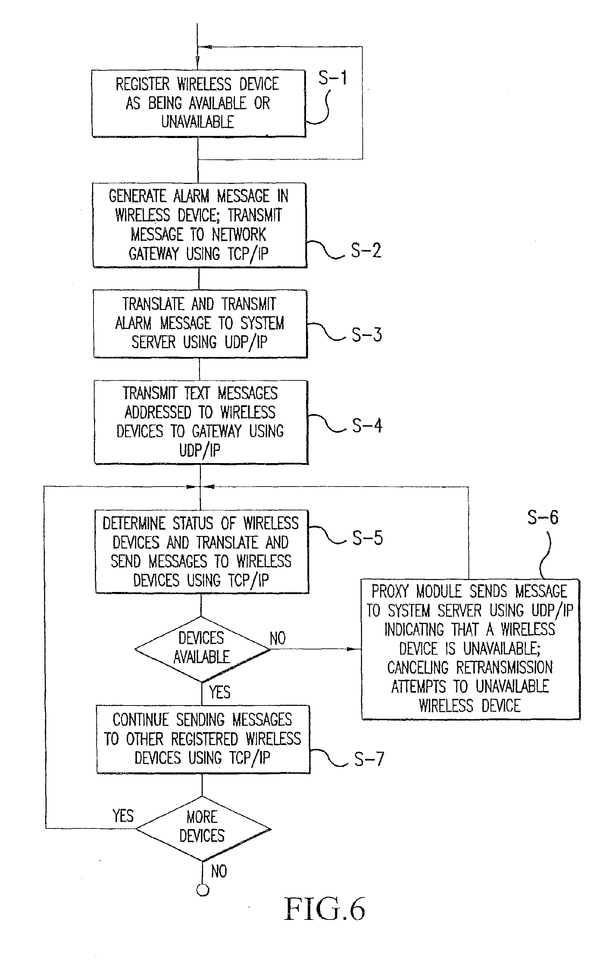

Figure 6 shows exemplary steps that may be taken in using the alarm service of the system server 1. In step S-1, wireless communications devices 3 within the wireless network can register with the alarm/messaging system 100 as being available for receiving messages, or alternatively as being unavailable. Subsequently, a status request message can be periodically sent requesting that the wireless communications devices 3 update their registration status. In step S-2, one of the wireless communications devices 3 can generate and transmit an alarm message using TCP/IP to the system server 1 that is first transmitted to the wireless network gateway 2. In step S-3, the wireless network gateway 2 translates and then transmits the alarm message using UDP/IP to the system server 1. In step S-4, the system server 1 begins transmitting alarm messages to a number of wireless communications devices 3. In step S-5, the wireless network gateway 2 checks the availability status of each receiving wireless communications device and translates the message addressed for transmission using TCP/IP. In step S-6, if a wireless communications device is unavailable, the wireless network gateway 2 responds with a message indicating that the wireless communications device is unavailable. In step S-7, the system server 1 then continues to transmit messages to another set of wireless communications devices 3 upon canceling retransmission attempts for unavailable wireless communications devices. The system server 1 continues sending alarm messages to all wireless communications devices 3 designated to receive alarms.

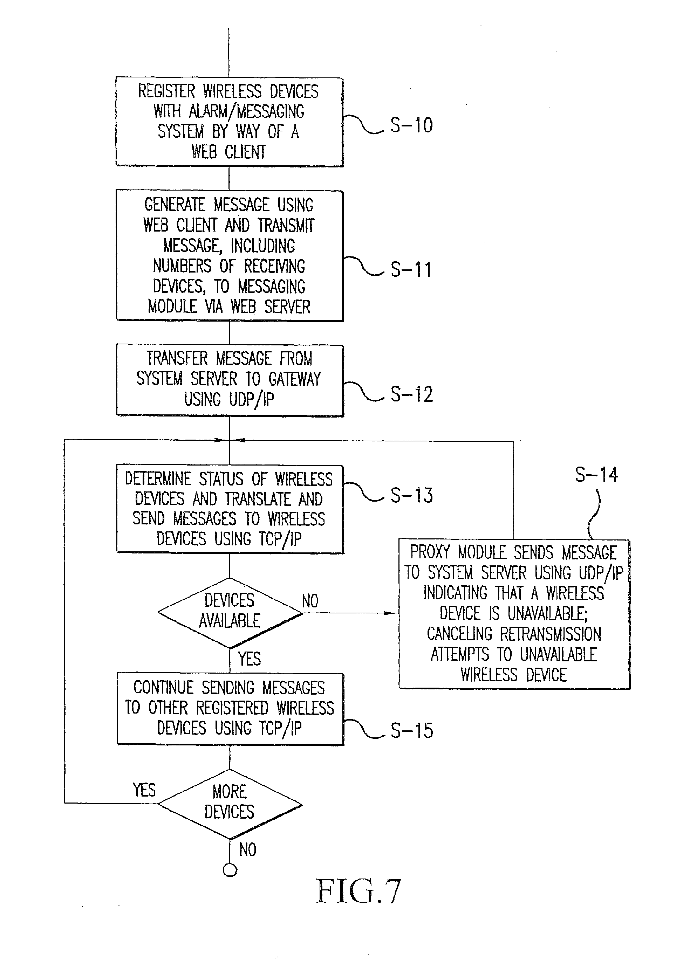

The system server 1 also includes a messaging module 13 that provides messaging services for messages entered, for example, through a Web client 4. Figure 7 shows steps that may be taken in using the messaging service of the system server 1. In step S-10, a user of the Web client 4 can enter phone numbers of receiving devices in order to initially register devices with the alarm/messaging system. The Web client 4 can be used to generate messages to be transmitted to registered wireless devices. In step S-11, a message generated using the Web client 4 is transmitted together with numbers of receiving devices over the Internet to the Web server 5 of the system server 1. Then, the Web server forwards the message using UDP to the messaging module 13. Similar to the case where alarm messages are sent to communications devices designated for receiving alarms, the system server 1 carries out a process to transmit the message to communications devices designated to receive the message. In step S-12, system server 1 transfers the message to the wireless network gateway 2. In step S-13, the Proxy module 12 of the wireless network gateway 2 checks the availability status of each wireless communications device. Further in step S-13, the wireless network gateway 2 translates the message and transmits the message using TCP/IP to available wireless communications devices 3. In step S-14, if a wireless communications device is unavailable, the network gateway 2 responds with a message informing the system server 1 that a particular wireless communications device is unavailable. In step S-5, the system server 1 then continues to transmit messages by way of the gateway 2 to another set of wireless communications devices upon canceling retransmission attempts for unavailable communications devices. The network gateway 2 continues sending messages to all wireless communications devices of the wireless network designated to receive the message.

Although the present invention has been described and illustrated in the above disclosure, it is understood that the present invention has been described by way of example and is not to be limited to the disclosed examples.

## Claims

1. A wireless network gateway for an alarm system, said alarm system including a wireless network providing wireless communication for a plurality of wireless communications devices and including a system server providing alarm services, the wireless network gateway comprising:
a proxy module arranged to maintain registration information for the wireless communications devices and maintain an availability status of each registered wireless communications device, wherein
the system server is arranged to contact the proxy module and to check whether the status of the wireless communications device is available when the system server initiates communication with a wireless communications device,
and the proxy module is arranged to respond using the second transmission protocol with a message informing the system server that the wireless communications device is unavailable, if it is determined that the status of the wireless communications device is unavailable.

2. The wireless network gateway of claim 1, further comprising a translation module arranged to translate an alarm message transmitted from a wireless communications device of said plurality of wireless communications devices using a wireless network transmission protocol into an alarm message that is transmitted to the system server using a second transmission protocol having a different transmission rate, and arranged to translate an alarm message received from the system server using the second transmission protocol into an alarm message for transmission to other wireless communications devices using the wireless network transmission protocol.

3. The wireless network gateway of claim 1 or 2, wherein the proxy module periodically sends a request to the wireless devices at a predetermined time period requesting registration of respective availability status for the wireless devices.

4. The wireless network gateway of claim 1, 2 or 3, further comprising:
a translation module for translating an alarm message transmitted from a wireless communications device of said plurality of wireless communications devices using TCP/IP into an alarm message to be transmitted to the system server using UDP/IP, and for translating the alarm message received from the system server using UDP/IP into an alarm message for transmission to other wireless communications devices using TCP/IP.

5. A method for sending a message to wireless devices through a wireless network gateway in an alarm/messaging system, the wireless network gateway having a proxy module, the method comprising the steps of:
generating a message;
transmitting the message to a system server of the alarm/messaging system;
producing addressed messages from the transmitted message, the addressed messages including the addresses of said wireless devices;
determining a status of each of the addressed wireless devices, as either available or unavailable,
wherein if the status of an addressed wireless device is unavailable, the proxy module sends a message to the system server indicating that the addressed wireless device is unavailable; and
sending messages to available addressed wireless devices.

6. The method of claim 5, further comprising a step of periodically registering wireless devices as being either available or as being unavailable.

7. The method of claim 5 or 6, wherein the system server includes a Web server, the method further comprising a step of:
entering registration information for a plurality of wireless devices using a Web client, and
transmitting the registration information of the wireless devices to the Web server.

8. The method of claim 7, further comprising steps of:
generating a message using the Web client and transmitting the message, including numbers of receiving wireless devices, to the Web server, and
transmitting the message from the Web server to a messaging module of the system server using UDP/IP.

9. The method of any of the claims 5 - 8, wherein the wireless network gateway further includes a translation module, wherein the step of transmitting the message to the system server of the alarm/messaging system, comprises steps of:
transmitting the message to the translation module of the wireless network gateway;
translating the format of the message from TCP format to UDP format so that the message is suitable for the system server; and
transmitting the translated message to the system server.

10. The method of any of the claims 5 - 9, wherein the wireless network gateway includes a translation module, wherein the step of sending messages to addressed wireless devices, comprises a step of:
translating by the translation module the messages from UDP format to TCP format for transmission to wireless devices using TCP/IP.

11. A communications system, comprising:
a wireless network providing wireless communication for a plurality of wireless communications devices;
a system server providing alarm services; and
a the wireless network gateway of any of the claims 1 - 4 in communication with the wireless network and system server.

12. The communications system of claim 11, further comprising a Web server connected to the system server,
wherein said system server comprises a messaging module for providing messaging services,
wherein the plurality of wireless communications devices are registered by transmitting registration information for respective wireless communications devices from a Web client to said proxy module via the Web server, and
wherein a message is transmitted from the Web client via the Web server to the messaging module of the system server.

13. The communications system of claim 12, wherein the Web client generates a message and transmits the message, including numbers of receiving devices, to the Web server, and wherein the Web server transmits the message to a messaging module of the system server using UDP/IP.

14. The communications system of claim 11, 12 or 13, further comprising:
digital enhanced cordless telecommunications DECT gateway for transmitting an alarm or message to and
from telephones in communication with the DECT gateway, for the alarm or message transmitted between the system server and the DECT gateway.

15. The communications system of any of the claims 11 - 14, wherein the proxy module of the wireless network gateway periodically sends a request to the wireless devices at a predetermined time period requesting registration of respective availability status for the wireless devices.

16. The communications system of any of the claims 11 - 15, wherein the wireless network gateway further includes
a translation module for translating an alarm message transmitted from a wireless communications device of said plurality of wireless communications devices using TCP/IP into an alarm message to be transmitted to the system server using UDP/IP, and
for translating the alarm message received from the system server using UDP/IP into an alarm message for transmission to other wireless communications devices using TCP/IP.
